# EUROPÄISCHE PATENTSCHRIFT

(11) **EP 0 895 663 B1**
(45) Veröffentlichungstag und Bekanntmachung des Hinweises auf die Patenterteilung: **07.04.2004**
(21) Anmeldenummer: 98914801.0
(22) Anmeldetag: 21.02.1998
(51) Int. Cl.: H02G 5/08

(54) **ABGANGSKASTEN, INSBESONDERE FÜR SCHIENENVERTEILER**
TAP-OFF UNIT, ESPECIALLY FOR BUSBAR TRUNKING SYSTEMS
BOITES DE DISTRIBUTION, EN PARTICULIER POUR BARRE OMNIBUS

(30) Priorität: 27.02.1997 DE 19707866
(43) Veröffentlichungstag der Anmeldung: 10.02.1999
(73) Patentinhaber: Moeller GmbH, 53115 Bonn (DE)
(72) Erfinder: FRENZEL, Anton, D-53840 Troisdorf (DE)
(86) Internationale Anmeldenummer: PCT/DE1998/000528
(87) Internationale Veröffentlichungsnummer: WO 1998/038718

(56) Entgegenhaltungen:
- EP-A- 0 555 665

## Beschreibung

Die Erfindung betrifft einen Abgangskasten nach dem Oberbegriff des Anspruches 1.

In Fabrikbetrieben, in denen Stromverbraucher oft gewechselt werden müssen, werden Schienenverteiler mit starren Stromschienen, in der Regel Flachschienen, eingesetzt.
Der Stromabzweig wird mittels Abzweigkästen realisiert, die ein Kontaktorgan zur elektrischen Verbindung der Stromschienen aufweisen.
Die Abzweigkästen weisen Schalt- oder Schutzgeräte oder aber auch Schmelzsichrerungen auf, die den Abzweigleitungen zwischengeschaltet sind.

Lichtbögen, die beim Trennen der Kontaktorgane unter Last entstehen, verschlechtern die Kontaktstellen der Stromschienen. Derartige Abgangskästen sind außerdem in der Weise auszubilden, dass eine Gefährdung des Bedienungspersonals durch Berührung spannungsführender Teile oder die Bildung von Lichtbogen verhindert wird.

Ein Abgangskasten mit einer Befestigungs- und Verriegelungsvorrichtung der diese Anforderungen erfüllt ist in der EP 0 555 665 B1 näher beschrieben.

Die Befestigungs- und Verriegelungsvorrichtung besteht aus einer um ihre Längsachse drehbaren Achse, die ein mit dem Schienenkanal korrespondierendes Befestigungs- und Verriegelungselement und ein mit dem zweiten Kontaktorgan korrespondierendes Sperrteil aufweist.

Nachteilig ist, dass die vorgeschlagene Ausführungsform aus einer Vielzahl von Einzelteilen besteht und daß eine aufwendige Montage erforderlich ist.

Aufgabe der Erfindung ist es deshalb, einen Abgangskasten nach dem Oberbegriff des Anspruches 1 zu schaffen, bei der die Befestigungs- und Verriegelungsvorrichtung aus wenigen Teilen besteht und leicht montierbar ist.

Die Aufgabe der Erfindung wird durch die kennzeichnenden Merkmale des Anspruches 1 gelöst, während in den Unteransprüchen besonders vorteilhafte Weiterbildungen der Erfindung gekennzeichnet sind.

Anhand der Zeichnung, in der ein Ausführungsbeispiel dargestellt ist, sollen die Erfindung, weitere Ausgestaltungen und Verbesserungen der Erfindung und weitere Vorteile näher beschrieben und erläutert werden.

Es zeigt:
- Fig. 1: eine Darstellung der Befestigungs- und Verriegelungsvorrichtung in entriegelter Stellung,
- Fig. 2: eine Darstellung der Befestigungs- und Verriegelungsvorrichtung in verrriegelter Stellung,
- Fig. 3: eine perspektivische Darstellung des Befestigungs- und Verriegelungsvorrichtung und
- Fig. 4: eine Querschnittsdarstellung des Befestigungs- und Verriegelungsvorrichtung.

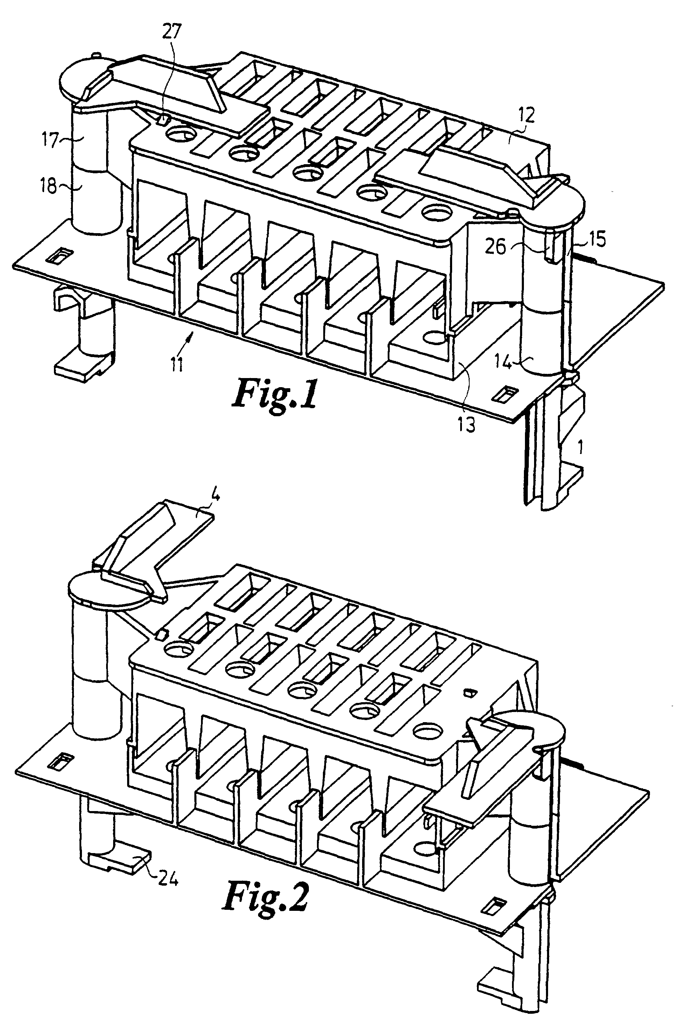

Das in den Figuren 1 und 2 gezeigte Kontaktgehäuse 11 des ersten Kontaktorgans besteht aus zwei Gehäusehälften, d.h. einer oberen Gehäusehälfte 12 und einer unteren Gehäusehälfte 13.

An den Seiten des Kontaktgehäuses 11 sind Führungsrohre 14 angeordnet, die zur Lagerung der Befestigungs- und Verriegelungsvorrichtung 1 vorgesehen sind.

Das Führungsrohr 14 ist an der Außenstelle mit einer Öffnung 15 in Form eines vertikal angeordneten Schlitzes versehen, so dass der Querschnitt des Führungsrohres 14 einen offenen Ring bildet.

Die Öffnung 15 ist zur Montage der Befestigungs- und Verriegelungsvorrichtung 1 vorgesehen.

Das erste Kontaktelement weist somit seitliche Öffnungen auf, in denen - die Befestigungs- und Verriegelungsvorrichtung 3 einführbar ist.

Das Führungsrohr 14 setzt sich aus zwei Hälften zusammen, wobei die obere Hälfte 17 Teil der oberen Gehäusehälfte 12 und die untere Hälfte 18 des Führungsrohres 14 Teil der oberen Gehäusehälfte 12 ist.

Der Abgangskasten besteht aus einem ersten Kontaktorgan, das die elektrische Verbindung zu den Stromschienen des Schienenverteilers herstellt und einem zweiten Kontaktorgan mit Kontakten und damit korrespondierenden Gegenkontakten, welches als Lasttrenner ausgeführt ist, wie bereits in der EP 0 555 665 B1 gezeigt und beschrieben ist.

Weiterhin sind die Gegenkontakte elektrisch mit dem ersten Kontaktorgan verbunden.
Die Kontakte sind U-förmige bzw. hufeisenförmige Kontaktelemente, die mit dem Deckel mechanisch verbunden und durch ein Isoliergehäuse von diesem elektrisch isoliert sind.

Die Schenkel der Kontakte, ragen aus dem Isoliergehäuse durch Öffnungsschlitze, in die Gegenkontakte und bilden eine Kontaktbrücke, wenn der Deckel geschlossen ist.
Beide Öffnungsschlitze sind einem Kontakt zugeordnet. Die Gegenkontakte sind in einem Kontaktgehäuse eingebettet, an dem die eben erwähnten Öffnungsschlitze vorhanden sind.

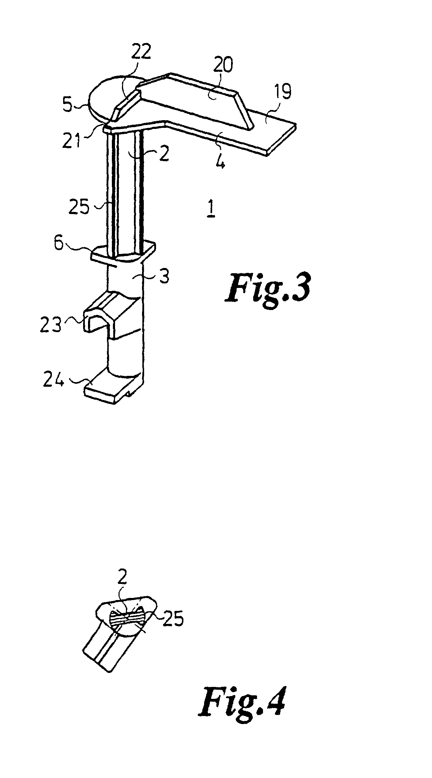

Die Befestigungs- und Verriegelungsvorrichtung 1 besteht, wie in Fig. 3 zu sehen ist, aus einer um ihre Längsachse drehbaren Achse 2, die ein mit dem Schienenkanal korrespondierendes Befestigungs- und Verriegelungselement 3 und ein mit dem zweiten Kontaktorgan bzw. Lasttrenner korrespondierendes Sperrteil 4 aufweist, wobei das Sperrteil ein unzulässiges Aufsetzen des Abgangkastendeckels un somit schließen des zweiten Kontaktorgans verhindert.

Das Befestigungs- und Verriegelungselement 3 und das Sperrteil 4 sind mit der Achse 2 einstückig verbunden.

Zwei Haltemittel 5,6, die mit dem Befestigungs- und Verriegelungselement 3 verbunden und um das erste Kontaktelement sandwitchartig angeordnet sind, sorgen für eine Vorfixierung beider Gehäusehälften 12 und 13. Darüber hinaus verhindern die Haltemittel 5,6 ein vertikales Verschieben der Befestigungs- und Verriegelungsvorrichtung 1, ohne dass zusätzliche Teile oder sonstige Befestigungsmittel erforderlich sind.

Die Haltemittel 5,6 sind um die Achse 2 kragenförmig ausgebildet, womit sie sich jeweils an den Hälften 17, 18 des Führungsrohres 14 abstützen.

Das Sperrteil 4 besteht aus einem viereckförmigen Flachstück 19, einer senkrecht angeformten Handhabe 20, einem Drehanschlag 21 und einer Versteifungsrippe 22.

Das Befestigungs- und Verriegelungselement 3 besteht in bekannter Weise (EP 0 555 665 B1, Bezugszeichen 18,19) aus einem Befestigungszapfen 23 und einem Sperriegel 24.

Die an dem Befestigungszapfen 23 vorhandene Schräge verursacht beim Befestigen des Abgangskasten, d.h. drehen des Befestigungs- und Verriegelungselementes 3, ein Spannen bzw. Zusammendrücken der Gehäusehälften 12 und 13, so dass diese ohne zusätzliche Befestigungsmittel festgelegt werden.

Die Achse 2 weist einen länglichen Querschnitt auf, wie in Fig. 4 dargestellt ist. Die Enden des Querschnitts sind jeweils mit einer Verdickung 25 versehen, die ein Abbrechen der Achse 2 der verhindern soll.

Durch den länglichen Querschnitt kann die Achse 2 leicht mit ihrer Schmalseite in die Öffnung 15 eingeführt werden. Schon bei leichtem Drehen bleibt die Achse 2 in dem Führungsrohr 14 unverlierbar gehalten.

Im montierten Zustand kann durch die 90 Grad-Drehbegrenzung mit Hilfe des Sperrzapfens 26, des Drehanschlages 21 sowie der Anschlagnase 27, die Achse 2 nicht ohne weiteres aus der Öffnung fallen.

Die Befestigungs- und Verriegelungsvorrichtung 1 besteht aus einem einzigen Kunststoffteil und kann daher kostengünstig hergestellt werden.

Die Befestigungs- und Verriegelungsvorrichtung 1, die in dem Führungsrohr 14 gelagert ist und mit zwei Befestigungs- und Verriegelungsvorrichtungen 1 versehen ist, ist in der Fig. 1 in verriegelter Position dargestellt, wobei im Grunde zwei Befestigungs- und Verriegelungsvorrichtungen 1 vorhanden sind.

Der Befestigungszapfen 23 und der Sperriegel 24 sind um 90 Winkelgrade zum Sperrteil 4 versetzt angeordnet, wobei im montierten Zustand bei entriegelter Stellung die Sperrteile 4 zueinander gerichtet und die Sperriegel 24 parallel aber in entgegengesetzter Richtung gerichtet sind, wie Fig. 1 zeigt, wobei bei verriegelter Stellung die Sperrteile 4 parallel aber in entgegengesetzter Richtung gerichtet sind und die Sperriegel 24 zueinander gerichtet sind, wie Fig. 2 zeigt.

Um eine 90 Grad-Drehbegrenzung der Befestigungs- und Verriegelungsvorrichtung 1 zu erreichen ist einerseits an dem Führungsrohr 14 ein Sperrzapfen 26 angeformt, das an dem Drehanschlag 21 bei verriegelter Stellung stößt und andererseits eine Anschlagnase 27 angeordnet, die an dem Sperrteil 4 bei entriegelter Stellung stößt.

### Liste der Bezugszeichen

Befestigungs- und Verriegelungsvorrichtung 1
Achse 2
Befestigungs- und Verriegelungselement 3
Sperrteil 4
Haltemittel 5,6
Kontaktgehäuse 11
Gehäusehälften 12, 13
Führungsrohre 14
Öffnung 15
Hälften 17, 18
Flachstück 19
Handhabe 20
Drehanschlag 21
Versteifungsrippe 22
Befestigungszapfen 23
Sperriegel 24
Verdickung 25
Sperrzapfen 26
Anschlagnase 27

## Patentansprüche

1. Abgangskasten, insbesondere für Schienenverteiler, mit mindestens einer Befestigungs- und Verriegelungsvorrichtung (1), mit einem Kontaktgehäuse (11) für ein erstes Kontaktorgan zur elektrischen Verbindung von Stromschienen in dem Schienenkanal und einem zweiten Kontaktorgan, welches derart wirkt, daß die Kontaktherstellung und Kontakttrennung des ersten Kontaktorgans zwangsläufig nur stromlos erfolgen kann, wobei ferner die Befestigungs- und Verriegelungsvorrichtung (1) aus einer um ihre Längsachse drehbaren Achse (2) besteht, die ein mit dem Schienenkanal korrespondierendes Befestigungs- und Verriegelungselement (3) und ein mit dem zweiten Kontaktorgan korrespondierendes Sperrteil (4) aufweist, **dadurch gekennzeichnet, dass** das Befestigungs- und Verriegelungselement (3) und das Sperrteil (4) mit der Achse einstückig verbunden sind, dass zwei Haltemittel (5,6) vorhanden sind, die mit der Befestigungs- und Verriegelungsvorrichtung (1) verbunden und um das Kontaktgehäuse (11) des ersten Kontaktelementes sandwichartig angeordnet sind und dass das Kontaktgehäuse (11) seitliche Öffnungen aufweist, in denen die Befestigungs- und Verriegelungsvorrichtung (1) einführbar ist.

2. Abgangskasten nach Anspruch 1, **dadurch gekennzeichnet**, dass-das Kontaktgehäuse (11) des ersten Kontaktorgans aus zwei Gehäusehälften, d.h. einer oberen Gehäusehälfte (12) und einer unteren Gehäusehälfte (13) besteht.

3. Abgangskasten nach Anspruch 1 oder 2, **dadurch gekennzeichnet, dass** an den Seiten des Kontaktgehäuses (11) Führungsrohre (14) angeordnet sind, die zur Lagerung der Befestigungs- und Verriegelungsvorrichtung (1) vorgesehen sind, wobei das jeweilige Führungsrohr (14) an der Außenstelle mit einer Öffnung (15) in Form eines vertikal angeordneten Schlitzes versehen ist, so dass der Querschnitt des Führungsrohres (14) einen offenen Ring bildet, wodurch das Kontaktgehäuse (11) des ersten Kontaktelementes seitliche Öffnungen aufweist, in denen die Befestigungs- und Verriegelungsvorrichtung (1) einführbar ist.

4. Abgangskasten nach einem der vorhergehenden Ansprüche, **dadurch gekennzeichnet, dass** ein Führungsrohr (14) sich aus zwei Hälften zusammensetzt, wobei eine obere Hälfte (17) Teil einer oberen Gehäusehälfte (12) und eine untere Hälfte (18) des Führungsrohres (14) Teil einer oberen Gehäusehälfte (12) ist.

5. Abgangskasten nach einem der vorhergehenden Ansprüche, **dadurch gekennzeichnet, dass** die zwei Haltemittel (5,6) für eine Vorfixierung beider Gehäusehälften (12 und 13) vorgesehen sind, wobei die Haltemittel (5,6) derart ausgebildet sind, dass sie ein vertikales Verschieben der Befestigungs- und Verriegelungsvorrichtung (1) verhindern, ohne - dass zusätzliche Teile oder sonstige Befestigungsmittel erforderlich sind.

6. Abgangskasten nach einem der vorhergehenden Ansprüche, **dadurch gekennzeichnet, dass** die Haltemittel (5,6) um die Achse (2) kragenförmig ausgebildet sind, womit sie sich jeweils an Hälften (17, 18) eines Führungsrohres (14) abstützen.

7. Abgangskasten nach einem der vorhergehenden Ansprüche, **dadurch gekennzeichnet, dass** das Sperrteil (4) aus einem viereckförmigen Flachstück (19), einer senkrecht angeformten Handhabe (20), einem Drehanschlag (21) und einer Versteifungsrippe (22) besteht.

8. Abgangskasten nach einem der vorhergehenden Ansprüche, **dadurch gekennzeichnet, dass** das Befestigungs- und Verriegelungselement (3) aus einem Befestigungszapfen (23) und einem Sperriegel (24) besteht.

9. Abgangskasten nach einem der vorhergehenden Ansprüche, **dadurch gekennzeichnet, dass** an einem Befestigungszapfen (23) Schrägen vorhanden sind, die beim Befestigen des Abgangskasten, d.h. drehen des Befestigungs- und Verriegelungselementes (3), ein Spannen bzw. Zusammendrücken von Gehäusehälften (12 und 13) verursachen, so dass diese ohne zusätzliche Befestigungsmittel festgelegt werden können.

10. Abgangskasten nach einem der vorhergehenden Ansprüche, **dadurch gekennzeichnet, dass** die Achse (2) einen länglichen Querschnitt aufweist, wobei die Enden des Querschnitts mit einer Verdickung (25) versehen sind.

11. Abgangskasten nach einem der vorhergehenden Ansprüche, **dadurch gekennzeichnet, dass** die Befestigungs- und Verriegelungsvorrichtung (1) aus einem einzigen Kunststoffteil besteht.

12. Abgangskasten nach einem der vorhergehenden Ansprüche, **dadurch gekennzeichnet, dass** ein Befestigungszapfen (23) und ein Sperriegel (24) um 90 Winkelgrade zum Sperrteil (4) versetzt angeordnet sind, wobei im montierten Zustand bei entriegelter Stellung die Sperrteile (4) zueinander gerichtet und Sperriegel (24) parallel aber in entgegengesetzter Richtung gerichtet sind, wobei bei verriegelter Stellung die Sperrteile (4) parallel aber in entgegengesetzter Richtung gerichtet sind und die Sperriegel (24) zueinander gerichtet sind.

13. Abgangskasten nach einem der vorhergehenden Ansprüche, **dadurch gekennzeichnet, dass**, um eine 90 Grad-Drehbegrenzung der Befestigungs- und Verriegelungsvorrichtung zu erreichen, einerseits an einem Führungsrohr (14) ein Sperrzapfen (26) angeformt ist, welches an einem Drehanschlag (21) bei verriegelter Stellung stößt und dass andererseits eine Anschlagnase (27) angeordnet ist, die an dem Sperrteil (4) bei entriegelter Stellung stößt.

## Claims

1. Tap-off unit, in particular for busbar trunking systems, having at least one mounting and locking apparatus (1), having a contact enclosure (11) for a first contact member for electrical connection of busbars in the busbar channel, and having a second contact member which makes it possible to make and break contacts in the first contact member positively only when no current is flowing in them, with the mounting and locking apparatus (1) comprising a shaft (2) which can rotate about its longitudinal axis and has a mounting and locking element (3), which corresponds with the busbar channel, and a blocking part (4) which corresponds with the second contact member, **characterized in that** the mounting and locking element (3) and the blocking part (4) are integrally connected to the shaft, **in that** two holding means (5, 6) are provided, which are connected to the mounting and locking apparatus (1) and are arranged like a sandwich around the contact enclosure (11) of the first contact member, and **in that** the contact enclosure (11) has side openings, in which the mounting and locking apparatus (1) can be inserted.

2. Tap-off unit according to Claim 1, **characterized in that** the contact enclosure (11) of the first contact member comprises two enclosure halves, that is to say an upper enclosure half (12) and a lower enclosure half (13).

3. Tap-off unit according to Claim 1 or 2, **characterized in that** guide tubes (14) are arranged on the sides of the contact enclosure (11) and are provided for supporting the mounting and locking apparatus (1), with each guide tube (14) being provided on the outside with an opening (15) in the form of a vertically arranged slot, such that the cross section of the guide tube (14) forms an open ring, as a result of which the contact enclosure (11) of the first contact member has side openings, in which the mounting and locking apparatus (1) can be inserted.

4. Tap-off unit according to one of the preceding claims, **characterized in that** a guide tube (14) is composed of two halves, with an upper half (17) being part of an upper enclosure half (12) and a lower half (18) of the guide tube (14) being part of an upper enclosure half (12).

5. Tap-off unit according to one of the preceding claims, **characterized in that** the two holding means (5, 6) are provided for initial fixing of the two enclosure halves (12 and 13), with the holding means (5, 6) being designed such that they prevent vertical movement of the mounting and locking apparatus (1), without any additional parts or other mounting means being required.

6. Tap-off unit according to one of the preceding claims, **characterized in that** the holding means (5, 6) are designed in the form of a collar around the shaft (2), by which means they are each supported on halves (17, 18) of a guide tube (14).

7. Tap-off unit according to one of the preceding claims, **characterized in that** the blocking part (4) comprises a quadrilateral flat piece (19), a vertically arranged handle (20), a rotation stop (21) and a reinforcing rib (22).

8. Tap-off unit according to one of the preceding claims, **characterized in that** the mounting and locking element (3) comprises a mounting pin (23) and a blocking bar (24).

9. Tap-off unit according to one of the preceding claims, **characterized in that** a mounting pin (23) has oblique surfaces, which cause the enclosure halves (12 and 13) to be clamped and pressed together while the tap-off unit is being mounted, that is to say the mounting and locking element (3) being rotated, so that it can be fixed without any additional mounting means.

10. Tap-off unit according to one of the preceding claims, **characterized in that** the shaft (2) has an elongated cross section, with the ends of the cross section being provided with a thickened region (25).

11. Tap-off unit according to one of the preceding claims, **characterized in that** the mounting and locking apparatus (1) comprises a single plastic part.

12. Tap-off unit according to one of the preceding claims, **characterized in that** a mounting pin (23) and a blocking bar (24) are arranged offset through ninety angular degrees with respect to the blocking part (4), with the blocking parts (4) being aligned with one another, and the blocking bars (24) being aligned parallel but in the opposite direction, in the mounted state and in the unlocked position, with the blocking parts (4) being arranged parallel but in the opposite direction, and the blocking bars (24) being aligned with one another in the locked position.

13. Tap-off unit according to one of the preceding claims, **characterized in that** in order to provide a 90 degree rotation limit for the mounting and locking apparatus, a blocking pin (26) is integrally formed on one side of the guide tube (14) and abuts against a rotation stop (21) in the locked position, and **in that** a stop tab (27) is arranged on the other side, and abuts against the blocking part (4) in the unlocked position.

## Revendications

1. Boîte de distribution, en particulier pour barres omnibus, avec au moins un dispositif (1) de fixation et de verrouillage, avec un boîtier de contact (11) pour un premier organe de contact en vue de la liaison électrique de rails de courant dans le canal de rails et un deuxième organe de contact qui agit de telle sorte que la réalisation du contact et la séparation du contact du premier organe de contact ne puissent s'effectuer qu'obligatoirement en l'absence de courant, et en outre le dispositif (1) de fixation et de verrouillage est constitué d'un axe (2), apte à tourner autour de son axe longitudinal, qui présente un élément (3) de fixation et de verrouillage correspondant au canal de rails et une partie de blocage (4) qui correspond au deuxième organe de contact, **caractérisée en ce que** l'élément (3) de fixation et de verrouillage et la pièce de blocage (4) sont reliés d'un seul tenant à l'axe, **en ce que** deux moyens de maintien (5, 6) sont présents et sont reliés au dispositif (1) de fixation et de verrouillage et sont disposés en sandwich autour du boîtier de contact (11) du premier élément de contact, et **en ce que** le boîtier de contact (11) présente des ouvertures latérales dans lesquelles le dispositif (1) de fixation et de verrouillage peut être inséré.

2. Boîte de distribution selon la revendication 1, **caractérisée en ce que** le boîtier de contact (11) du premier organe de contact est constitué de deux moitiés de boîtier, c'est-à-dire d'une moitié supérieure de boîtier (12) et d'une moitié inférieure de boîtier (13).

3. Boîte de distribution selon la revendication 1 ou 2, **caractérisée en ce que** des tubes de guidage (14) qui sont prévus pour le montage du dispositif (1) de fixation et de verrouillage sont disposés sur le côté du boîtier de contact (11), chaque tube de guidage (14) étant doté sur l'emplacement extérieur d'une ouverture (15) qui présente la forme d'une fente disposée verticalement de telle sorte que la section transversale du tube de guidage (14) forme un anneau ouvert, le boîtier de contact (11) du premier élément de contact présentant des ouvertures latérales dans lesquelles le dispositif (1) de fixation et de verrouillage peut être inséré.

4. Boîte de distribution selon l'une des revendications précédentes, **caractérisée en ce qu'**un tube de guidage (14) est constitué de l'assemblage de deux moitiés, une moitié supérieure (17) faisant partie d'une moitié supérieure de boîtier (12) et une moitié inférieure (18) du tube de guidage (14) faisant partie d'une moitié supérieure de boîtier (12).

5. Boîte de distribution selon l'une des revendications précédentes, **caractérisée en ce que** les deux moyens de maintien (5, 6) sont prévus pour une préfixation des deux moitiés du boîtier (12 et 13), les moyens de maintien (5, 6) étant configurés de manière à empêcher un coulissement vertical du dispositif (1) de fixation et de verrouillage sans nécessiter de parties supplémentaires ou de moyens de fixation spécifiques.

6. Boîte de distribution selon l'une des revendications précédentes, **caractérisée en ce que** les moyens de maintien (5, 6) sont configurés en forme de collet autour de l'axe (2), par lequel ils s'appuient chaque fois sur les moitiés (17, 18) d'un tube de guidage (14).

7. Boîte de distribution selon l'une des revendications précédentes, **caractérisée en ce que** la pièce de blocage (4) est constituée d'une pièce plate (19) de forme rectangulaire, d'une poignée (20) formée à la perpendiculaire, d'une butée de rotation (21) et d'une nervure de renfort (22).

8. Boîte de distribution selon l'une des revendications précédentes, **caractérisée en ce que** l'élément (3) de fixation et de verrouillage est constitué d'un tourillon de fixation (23) et d'un pêne de blocage (24).

9. Boîte de distribution selon l'une des revendications précédentes, **caractérisée en ce que** sur un tourillon de fixation (23) sont prévues des pentes qui, lors de la fixation de la boîte de distribution, c'est-à-dire de la rotation de l'élément (3) de fixation et de verrouillage, provoquent un serrage ou une compression des moitiés de boîtier (12 et 13) de telle sorte que celles-ci peuvent être immobilisées sans moyen de fixation supplémentaire.

10. Boîte de distribution selon l'une des revendications précédentes, **caractérisée en ce que** l'axe (2) présente une section transversale allongée, les extrémités de la section transversale étant dotées d'un épaississement (25).

11. Boîte de distribution selon l'une des revendications précédentes, **caractérisée en ce que** le dispositif (1) de fixation et de verrouillage est constitué d'une seule pièce en matière synthétique.

12. Boîte de distribution selon l'une des revendications précédentes, **caractérisée en ce qu'**un tourillon de fixation (23) et un pêne de blocage (24) sont disposés à un décalage angulaire de 90 degrés par rapport à la pièce de blocage (4), et à l'état monté, dans la position déverrouillée, les pièces de blocage (4) sont orientées l'une vers l'autre et les pênes de blocage (24) sont orientés parallèlement mais dans des sens opposés, et dans la position verrouillée, les pièces de blocage (4) sont orientées parallèlement mais en sens opposé et les pênes de blocage (24) sont dirigés l'un vers l'autre.

13. Boîte de distribution selon l'une des revendications précédentes, **caractérisée en ce que** pour limiter la rotation du dispositif de fixation et de verrouillage à 90 degrés, d'une part un tourillon de blocage (26) est formé sur un tube de guidage (14) et vient buter contre une butée de rotation (21) dans la position verrouillée, et **en ce que** d'autre part un bec de butée (27) qui vient buter contre la pièce de blocage (4) dans la position déverrouillée est prévu.
